# FASCICULE DE BREVET EUROPEEN

(11) **EP 2 251 818 B1**
(45) Date de publication et mention de la délivrance du brevet: **09.04.2014**
(21) Numéro de dépôt: 10162718.0
(22) Date de dépôt: 12.05.2010
(51) Int. Cl.: G06K 7/10, H04M 1/725, G06K 7/00, G06K 19/07

(54) **Entité électronique apte à un fonctionnement en mode lecteur, carte à microcircuit et procédé associés**
Elektronische Einheit, die als Kartenleser funktionieren kann, Mikrochipkarte und entsprechende Verfahren
Electronic entity capable of operating in reader mode, associated chip card and method

(30) Priorité: 13.05.2009 FR 0902325
(43) Date de publication de la demande: 17.11.2010
(73) Titulaire: Oberthur Technologies, 92700 Colombes (FR)
(72) Inventeur: Stranges, Lorenzo, 92200, NEUILLY SUR SEINE (FR)
(74) Mandataire: Bonnans, Arnaud

(56) Documents cités:
- WO-A-2005/008575
- WO-A-2007/003978
- WO-A-2009/013646
- DE-U1- 29 717 395

## Description

L'invention concerne une entité électronique apte à un fonctionnement en mode lecteur, ainsi qu'une carte à microcircuit et un procédé associés.

Il est connu, comme le décrit par exemple la norme ISO14443, d'équiper une entité électronique d'un module de communication apte à un fonctionnement en mode lecteur dans lequel l'entité électronique génère un champ magnétique afin qu'un dispositif électronique entrant dans la portée du champ magnétique généré puisse entrer en communication avec l'entité électronique.

On peut alors prévoir que le module de communication soit également apte à un fonctionnement en mode passif, dans lequel l'entité électronique ne génère pas le champ magnétique mais fonctionne par exemple comme une carte sans contact (c'est-à-dire réalise des modulations de charge pour communiquer avec un lecteur dans le champ duquel elle se trouve).

Par rapport au mode passif notamment, le fonctionnement en mode lecteur est particulièrement consommateur d'énergie du fait de la génération du champ magnétique et on a donc cherché à limiter dans le temps le fonctionnement en mode lecteur, en particulier pour les entités électroniques portables alimentées par une batterie, tels que les téléphones portables.

Une première solution pour ce faire consiste à basculer en mode lecteur de manière intermittente et à revenir en mode passif si aucune communication n'est détectée après un certain laps de temps. Pour obtenir une baisse conséquente de la consommation, cette solution implique toutefois un espacement des périodes de fonctionnement en mode lecteur, qui peut s'avérer gênant pour l'utilisateur.

Une autre solution consiste à permettre à l'utilisateur de sélectionner le mode de fonctionnement du module de communication, au moyen d'un bouton prévu à cet effet (ce qui augmente toutefois le coût de l'entité électronique) ou dans un menu affiché sur un écran de l'entité électronique (ce qui peut toutefois s'avérer complexe pour l'utilisateur, en particulier dans le cas où l'entité électronique permet d'autres fonctionnalités elles aussi accessibles à travers un tel menu).

WO 2009/013646 A décrit une entité électronique.

Dans ce contexte l'invention propose une entité électronique selon la revendication 1.

L'utilisateur peut ainsi activer ou désactiver le mode lecteur par un simple mouvement de l'entité électronique.

Les moyens de commande sont par exemple aptes à comparer lesdites données à une signature d'un mouvement prédéterminé mémorisée dans l'entité électronique et à commander le basculement en mode lecteur en cas de comparaison positive.

L'entité électronique peut comprendre une carte à microcircuit qui équipe par exemple l'entité électronique de manière amovible, auquel cas la carte à microcircuit peut comprendre le module de détection et/ou les moyens de commande.

Il s'agit par exemple d'une carte d'identification à un réseau de téléphonie mobile.

En pratique, le module de communication peut être un module de communication en champ proche.

L'entité électronique est quant à elle par exemple un téléphone portable.

L'invention propose ainsi également une carte à microcircuit selon la revendication 9.

L'invention propose également un procédé selon la revendication 10.

D'autres caractéristiques et avantages de l'invention apparaitront à la lumière de la description qui suit, faite en référence aux dessins annexés dans lesquels :
- la figure 1 représente une entité électronique conforme aux enseignements de l'invention ;
- la figure 2 représente une carte à microcircuit équipant l'entité électronique de la figure 1.

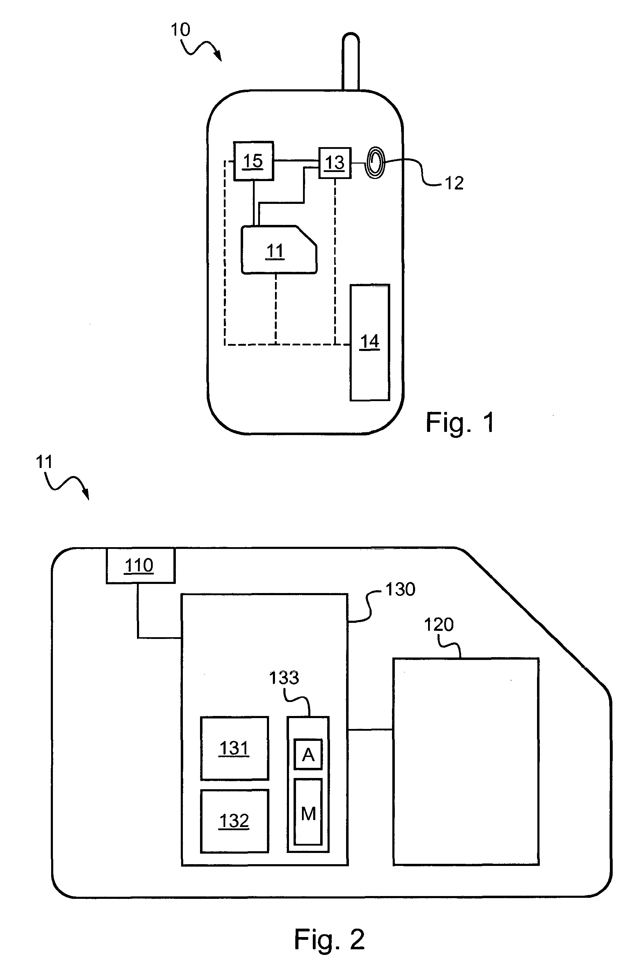

L'entité électronique 10 représentée en **figure 1** est un téléphone portable au moyen duquel on peut établir des communications (vocales ou permettant l'échange de données) dans un réseau de téléphonie cellulaire.

A cet effet, le téléphone portable 10 reçoit (par exemple dans un logement prévu à cet effet) une carte à microcircuit 11 d'identification au réseau de téléphonie mobile, telle qu'une carte SIM (pour "*Subscriber Identity Module*") ou USIM (pour "*Universal Subscriber Identity Module*").

Comme on le verra également dans la suite, la carte à microcircuit 11 présente des contacts (référencés de manière générale 110 en figure 2) au travers desquels la carte à microcircuit 11 peut communiquer d'une part avec un microprocesseur 15 du téléphone portable 10 et d'autre part (par exemple à travers une liaison de type SWP pour "*Single Wire Protocol*") avec un module de communication (ici en champ proche) 12, 13 composé dans l'exemple décrit d'un circuit d'interface de communication 13 (relié à la carte à microcircuit 11 à travers la liaison SWP) et d'une antenne 12.

Le module de communication 12, 13 est par exemple un module de communication NFC (pour "*Near Field Communication*"), éventuellement tel que décrit par la norme ISO14443.

Comme représenté en figure 1, l'interface 13 peut éventuellement être également connectée directement au microprocesseur 15.

Le téléphone portable 10 est alimenté par une batterie 14 connectée aux divers éléments décrits ci-dessus (à travers des liaisons représentées en pointillés en figure 1 pour mettre en évidence leur rôle d'alimentation).

On remarque que, par souci de simplification, une seule ligne représente chaque connexion entre deux éléments, même lorsqu'en pratique la connexion entre ces éléments est réalisée par une pluralité de lignes électriques.

Le module de communication formé de l'interface 13 et de l'antenne 12 est apte à fonctionner dans deux modes de fonctionnement distincts :
- un mode lecteur dans lequel l'antenne est parcourue par un courant de manière à générer un champ magnétique (ou électromagnétique) de manière prolongée (par exemple avec une fréquence à environ 13,56 MHz et éventuellement conforme à la norme ISO14443) de sorte qu'un dispositif électronique équipé d'un module de communication correspondant puisse entrer en communication avec l'interface 13 au moyen d'une modulation de charge produite par ce dispositif électronique ;
- un mode d'émulation de carte dans lequel l'interface 13 peut entrer en communication par modulation de charge avec un lecteur dès lors que l'antenne 12 entre dans le champ magnétique généré par ce lecteur.

Ces modes sont par exemple ceux du protocole HCl défini dans la norme ETSI 102622.

On comprend que le courant parcourant l'antenne 12 lors du fonctionnement en mode lecteur implique une consommation électrique supérieure à celle du fonctionnement en mode émulation de carte.

On a représenté en détail en **figure 2** la carte à microcircuit 11.

Comme déjà indiqué, la carte à microcircuit 11 présente des contacts 110 connectés à un processeur 130 de la carte à microcircuit 11 de sorte que ce processeur 130 peut entrer en communication avec le microprocesseur 15 du téléphone portable et l'interface de communication 13 à travers les contacts 110.

Le processeur 130 incorpore une mémoire morte 131 (où sont par exemple mémorisées des instructions dont l'exécution par le processeur 130 permet la mise en oeuvre de fonctionnalités de base de la carte à microcircuit 110), une mémoire vive 132 (utilisée par exemple pour mémoriser temporairement des données manipulées lors de l'exécution d'instructions par le processeur 130) et une mémoire non-volatile réinscriptible 133 (telle qu'une EEPROM) où est par exemple mémorisée une clé cryptographique permettant à l'utilisateur du téléphone portable 10 de s'identifier et d'accéder aux services du réseau de téléphonie mobile.

La mémoire réinscriptible 133 mémorise une application A de gestion du basculement entre mode lecteur et mode émulation de carte dont le fonctionnement sera décrit ci-après.

La mémoire réinscriptible 133 mémorise également des données M représentatives d'un mouvement associé au basculement entre mode lecteur et mode émulation de carte, tel que par exemple un seuil d'accélération (ou de manière générale une signature du mouvement), comme cela est décrit plus en détail dans la suite.

La carte à microcircuit 110 comprend enfin un accéléromètre 120 qui détecte le mouvement (en pratique au moins une composante de celui-ci, telle que l'accélération dans une direction donnée) de la carte à microcircuit 11, et par conséquent de l'entité électronique (téléphone portable) 10 qui la reçoit.

Lorsque l'accéléromètre 120 détecte un mouvement, il émet, à destination du processeur 130, une interruption qui provoque l'exécution de l'application A.

Lors de cette exécution, le processeur 130 reçoit les données de mouvement (par exemple d'accélération) émises par l'accéléromètre 120 et compare ces données aux données mémorisées M représentant la signature du mouvement attendu (par exemple le seuil d'accélération susmentionné).

Si le processeur 130 détermine par cette comparaison que le mouvement effectué (par la carte à microcircuit 11 et donc par le téléphone portable 10) correspond au mouvement dont la signature est mémorisée, le processeur 130 envoie à l'interface de communication 13 (via la liaison SWP) une commande d'activation du mode lecteur ("*EVT_ READER_REQUESTED*" selon le protocole HCl défini dans la norme ETSI 102622).

Le module de communication 12, 13 bascule alors en fonctionnement en mode lecteur.

Si aucune communication n'est établie par le module de communication 12, 13 après une durée prédéterminée (par exemple cinq secondes) à partir de l'activation du fonctionnement en mode lecteur, le module de communication 12, 13 bascule par exemple automatiquement du mode lecteur au mode émulation de carte (soit de manière préprogrammée à l'intérieur de l'interface 13, soit par une commande "*EVT_ END_OPENATI*" émise par le processeur 130 à destination de l'interface 13).

On prévoit dans ce contexte que le module de communication 12, 13 est en mode de fonctionnement émulation de carte à l'initialisation de l'entité électronique 10.

Ainsi, le module de communication 12, 13 fonctionne par défaut (et donc la plupart du temps) en mode émulation de carte, avec une faible consommation électrique, et bascule en fonctionnement en mode lecteur lorsque l'utilisateur effectue un mouvement prédéterminé avec l'entité électronique, et ce pour une période prédéterminée seulement.

En variante, on peut prévoir que la désactivation du mode lecteur (c'est-à-dire le basculement en mode émulation de carte) ne soit pas mise en oeuvre automatiquement à la fin d'une période prédéterminée, mais à la détection d'un autre mouvement (éventuellement identique à celui permettant l'activation) du téléphone 10 par l'utilisateur.

De même, on a décrit ci-dessus un exemple de réalisation dans lequel on détectait le dépassement d'un seuil d'accélération ; on peut prévoir ne variante d'autres types de mouvement déclenchant le basculement entre mode de fonctionnement émulation de carte et mode de fonctionnement lecteur.

Ces exemples ne sont quoi qu'il en soit que des modes possibles de réalisation de l'invention qui ne s'y limite pas. En particulier, certains éléments (tels que l'accéléromètre et les moyens de gestion du basculement entre modes de fonctionnement) sont situés dans la carte à microcircuit dans l'exemple décrit, mais pourrait être placés dans l'entité électronique en dehors de la carte à microcircuit.

## Revendications

1. Entité électronique comprenant un module de communication (12, 13) apte au moins à un fonctionnement en mode lecteur, dans lequel l'entité électronique génère un champ magnétique, et à un fonctionnement en mode passif, dans lequel l'entité électronique ne génère pas le champ magnétique, et comprenant
- un module (120) de détection de mouvement ou d'orientation apte à générer des données représentatives d'un mouvement ou d'une orientation de l'entité électronique ; **caractérisée en ce qu'**elle comprend :
- des moyens de commande (130) aptes à faire basculer le fonctionnement du module de communication (12, 13) entre le mode lecteur et le mode passif en fonction desdites données.

2. Entité électronique selon la revendication 1, **caractérisée en ce que** les moyens de commande sont aptes à comparer lesdites données à une signature d'un mouvement prédéterminé mémorisée dans l'entité électronique et à commander le basculement en mode lecteur en cas de comparaison positive.

3. Entité électronique selon la revendication 1 ou 2, **caractérisée en ce qu'**elle comprend une carte à microcircuit (11).

4. Entité électronique selon la revendication 3, **caractérisée en ce que** la carte à microcircuit (11) comprend le module de détection (120).

5. Entité électronique selon la revendication 3 ou 4, **caractérisée en ce que** la carte à microcircuit (11) comprend les moyens de commande (130).

6. Entité électronique selon l'une des revendications 3 à 5, **caractérisée en ce que** la carte à microcircuit (11) est une carte d'identification à un réseau de téléphonie mobile.

7. Entité électronique selon l'une des revendications 1 à 6, **caractérisée en ce que** le module de communication (12, 13) est un module de communication en champ proche.

8. Entité électronique selon l'une des revendications 1 à 7, **caractérisée en ce qu'**elle est un téléphone portable (10).

9. Carte à microcircuit apte à commander un basculement d'un mode de fonctionnement d'un module de communication entre un fonctionnement en mode lecteur, dans lequel le module génère un champ magnétique, et un fonctionnement en mode passif, dans lequel le module ne génère pas le champ magnétique, comprenant :
- un module (120) de détection de mouvement ou d'orientation apte à générer des données représentatives d'un mouvement ou d'une orientation de la carte à microcircuit ;
- des moyens de commande (130) aptes à commander le basculement en fonction desdites données.

10. Procédé de commande d'une entité électronique comprenant un module de communication apte au moins à un fonctionnement en mode lecteur, dans lequel l'entité électronique génère un champ magnétique, et à un fonctionnement en mode passif, dans lequel l'entité électronique ne génère pas le champ magnétique, **caractérisé en ce qu'**il comprend les étapes suivantes :
- détection d'un mouvement ou d'une orientation de l'entité électronique ;
- basculement du fonctionnement du module de communication entre le mode lecteur et le mode passif en fonction du mouvement détecté ou de l'orientation détectée.

## Patentansprüche

1. Elektronische Einheit, umfassend ein Kommunikationsmodul (12, 13), das wenigstens für einen Betrieb in einem Lesemodus, in dem die elektronische Einheit ein Magnetfeld erzeugt, und für einen Betrieb in einem Passivmodus, in dem die elektronische Einheit kein Magnetfeld erzeugt, ausgelegt ist, sowie umfassend:
ein Modul (120) zum Erfassen einer Bewegung oder einer Orientierung, das dafür ausgelegt ist, Daten zu erzeugen, die eine Bewegung oder eine Orientierung der elektronischen Einheit wiedergeben;
**dadurch gekennzeichnet, dass** sie umfasst:
Anweisungsmittel (130), die dafür ausgelegt sind, einen Wechsel des Betriebs des Kommunikationsmoduls (12, 13) zwischen dem Lesemodus und dem Passivmodus in Abhängigkeit von den Daten zu bewirken.

2. Elektronische Einheit nach Anspruch 1, **dadurch gekennzeichnet, dass** die Anweisungsmittel dafür ausgelegt sind, die Daten mit einer in der elektronischen Einheit gespeicherten Signatur bzw. Kennung einer vorbestimmten Bewegung zu vergleichen und den Wechsel in den Lesemodus für den Fall eines positiven Vergleiches anzuweisen.

3. Elektronische Einheit nach Anspruch 1 oder 2, **dadurch gekennzeichnet, dass** sie eine Mikroschaltungskarte bzw. Leiterplatte (11) umfasst.

4. Elektronische Einheit nach Anspruch 3, **dadurch gekennzeichnet, dass** die Mikroschaltungskarte bzw. Leiterplatte (11) das Erfassungsmodul (120) umfasst.

5. Elektronische Einheit nach Anspruch 3 oder 4, **dadurch gekennzeichnet, dass** die Mikroschaltungskarte bzw. Leiterplatte (11) die Anweisungsmittel (130) umfasst.

6. Elektronische Einheit nach einem der Ansprüche 3 bis 5, **dadurch gekennzeichnet, dass** die Mikroschaltungskarte bzw. Leiterplatte (11) eine Identifikationskarte für ein Mobiltelefonnetz ist.

7. Elektronische Einheit nach einem der Ansprüche 1 bis 6, **dadurch gekennzeichnet, dass** das Kommunikationsmodul (12, 13) ein Nahfeldkommunikationsmodul ist.

8. Elektronische Einheit nach einem der Ansprüche 1 bis 7, **dadurch gekennzeichnet, dass** sie ein tragbares Telefon (10) ist.

9. Mikroschaltungskarte bzw. Leiterplatte, die dafür ausgelegt ist, einen Wechsel eines Betriebsmodus eines Kommunikationsmoduls zwischen einem Betrieb in einem Lesemodus, in dem das Modul ein Magnetfeld erzeugt, und einem Betrieb in einem Passivmodus, in dem das Modul kein Magnetfeld erzeugt, anzuweisen, umfassend:
ein Modul (120) zum Erfassen einer Bewegung oder einer Orientierung, das dafür ausgelegt ist, Daten zu erzeugen, die eine Bewegung oder eine Orientierung der Mikroschaltungskarte bzw. Leiterplatte wiedergeben;
Anweisungsmittel (130), die dafür ausgelegt sind, den Wechsel in Abhängigkeit von den Daten anzuweisen.

10. Verfahren zum Anweisen einer elektronischen Einheit, die ein Kommunikationsmodul umfasst, das wenigstens für einen Betrieb in einem Lesemodus, in dem die elektronische Einheit ein Magnetfeld erzeugt, und für einen Betrieb in einem Passivmodus, in dem die elektronische Einheit kein Magnetfeld erzeugt, ausgelegt ist, **dadurch gekennzeichnet, dass** es die nachfolgenden Schritte umfasst:
Erfassen einer Bewegung oder einer Orientierung der elektronischen Einheit;
Wechseln des Betriebs des Kommunikationsmoduls zwischen dem Lesemodus und dem Passivmodus in Abhängigkeit von der erfassten Bewegung oder der erfassten Orientierung.

## Claims

1. Electronic entity comprising a communication module (12, 13) suitable at least for operation in reader mode, in which the electronic entity generates a magnetic field, and for operation in passive mode, in which the electronic entity does not generate the magnetic field, and comprising
- a motion or orientation detection module (120) able to generate data representative of a motion or of an orientation of the electronic entity; **characterised in that** it comprises:
- control means (130) able to toggle the operation of the communication module (12, 13) between the reader mode and the passive mode as a function of the said data.

2. Electronic entity according to claim 1, **characterised in that** the control means are able to compare the said data with a signature of a predetermined motion stored in the electronic entity and to control the toggling to reader mode in case of positive comparison.

3. Electronic entity according to claim 1 or 2, **characterised in that** it comprises a microcircuit card (11).

4. Electronic entity according to claim 3, **characterised in that** the microcircuit card (11) comprises the detection module (120).

5. Electronic entity according to claim 3 or 4, **characterised in that** the microcircuit card (11) comprises the control means (130).

6. Electronic entity according to one of claims 3 to 5, **characterised in that** the microcircuit card (11) is an identification card for a mobile telephone network.

7. Electronic entity according to one of claims 1 to 6, **characterised in that** the communication module (12, 13) is a near-field communication module.

8. Electronic entity according to one of claims 1 to 7, **characterised in that** it is a portable telephone (10).

9. Microcircuit card able to control a toggling of a mode of operation of a communication module between operation in reader mode, in which the module generates a magnetic field, and operation in passive mode, in which the module does not generate the magnetic field, comprising:
- a motion or orientation detection module (120) able to generate data representative of a motion or of an orientation of the microcircuit card;
- control means (130) able to control the toggling as a function of the said data.

10. Method of control of an electronic entity comprising a communication module suitable at least for operation in reader mode, in which the electronic entity generates a magnetic field, and for operation in passive mode, in which the electronic entity does not generate the magnetic field, **characterised in that** it comprises the following steps:
- detection of a motion or of an orientation of the electronic entity;
- toggling of the operation of the communication module between the reader mode and the passive mode as a function of the detected motion or of the detected orientation.
